# FASCICULE DE BREVET EUROPEEN

(11) **EP 3 070 427 B1**
(45) Date de publication et mention de la délivrance du brevet: **27.12.2017**
(21) Numéro de dépôt: 16153290.8
(22) Date de dépôt: 29.01.2016
(51) Int. Cl.: F41B 6/00, G01P 3/66, G01P 3/68, G01N 3/317, G01M 7/08, G01M 17/007

(54) **SYSTÈME POUR LANCER UN PROJECTILE EN VUE DU TEST DE LA SOLIDITÉ D'UN COMPOSANT DE VEHICULE AUTOMOBILE**
SYSTEM ZUM ABFEUERN EINES PROJEKTILS FÜR EINEN FESTIGKEITSTEST EINER KRAFTFAHRZEUGKOMPONENTE
SYSTEM FOR LAUNCHING A PROJECTILE IN ORDER TO TEST THE SOLIDITY OF A MOTOR VEHICLE COMPONENT

(30) Priorité: 17.03.2015 FR 1552176
(43) Date de publication de la demande: 21.09.2016
(73) Titulaire: Renault S.A.S., 92100 Boulogne-Billancourt (FR)
(72) Inventeur: LESELLIER, Pascal, 92130 Issy-les-Moulineaux (FR); ARNOUX, Ismael, 91580 Chauffour-lès-Étréchy (FR)

(56) Documents cités:
- DE-A1- 3 716 883
- US-A- 3 273 553
- US-A- 4 960 760
- US-A- 5 081 901
- US-A1- 2010 089 227

## Description

La présente invention concerne un système pour lancer un projectile contre un composant de véhicule automobile, et plus particulièrement contre un pare-brise de véhicule automobile.

Les normes actuelles en termes de sécurité des véhicules automobiles imposent d'effectuer des tests de la solidité des pare-brises, en particulier face aux impacts de gravillons.

Au cours de tels tests, un projectile de dimension et de masse comparables à celles d'un gravillon est lancé contre un pare-brise à tester, à une vitesse adaptée et en formant un angle adapté par rapport à la perpendiculaire au plan du pare-brise.

Pour lancer le projectile, on utilise de manière traditionnelle un simple tube, également appelé « sarbacane », dans lequel on lâche un gravillon ou un projectile de dimensions similaires à une certaine hauteur au-dessus du pare-brise.

Toutefois, un tel moyen ne permet pas de contrôler efficacement la vitesse de lancement du gravillon.

En particulier, il est impossible de réaliser plusieurs essais avec des angles différents par rapport à la perpendiculaire au plan du pare-brise, sans modifier l'inclinaison de ce dernier.

En effet, pour effectuer des tests avec des angles différents, il est nécessaire de modifier l'inclinaison du tube. En modifiant l'inclinaison du tube, on augmente ou on diminue le frottement du projectile sur la paroi du tube et on modifie la vitesse de lancement de celui-ci. Des lanceurs avec un solénoïde aptes à générer un champ magnétique capable d'entraîner un projectile sont divulgués dans US 2010/089227 A1 et US 5 081 901 A.

L'invention a donc pour but de fournir un système pour lancer un projectile comprenant un tube creux, permettant de contrôler la vitesse de lancement du projectile indépendamment de l'inclinaison du tube.

Au vu de ce qui précède, l'invention a pour objet un système selon la revendication 1 pour lancer un projectile contre un composant de véhicule automobile, comprenant un tube creux à l'intérieur duquel le projectile est apte à se déplacer.

En outre, ce système comprend au moins un solénoïde apte à générer un champ magnétique capable d'entraîner le projectile en translation selon la direction longitudinale du tube creux, au moins un détecteur de vitesse du mouvement de translation du projectile et un module de commande apte à recueillir le signal de vitesse émis par ledit détecteur de vitesse, à calculer un signal d'alimentation du solénoïde et à appliquer ledit signal d'alimentation au solénoïde.

Au moyen d'un tel système, il est possible de lancer un projectile constitué d'un matériau ferromagnétique contre un composant de véhicule automobile, en contrôlant la vitesse de lancement indépendamment de l'inclinaison du tube.

Selon un mode de réalisation, ce système comprend au moins un solénoïde à signal d'alimentation non réglable.

On peut en outre prévoir que le détecteur soit doté d'un capteur apte à détecter le passage du projectile en un point du tube creux, le système comportant un calculateur capable de mesurer le temps de passage du projectile audit point, le calculateur étant en outre capable de déterminer la vitesse du projectile en fonction du temps de passage calculé.

On peut également prévoir que ledit détecteur soit doté d'un premier capteur apte à détecter un premier passage du projectile en un premier point du tube creux et d'un second capteur apte à détecter un second passage du projectile en un second point du tube creux distinct du premier point. Le système comporte alors un calculateur capable de mesurer le temps écoulé entre le premier passage et le deuxième passage et de calculer la vitesse du projectile en fonction du temps écoulé mesuré et de la distance entre le premier point et le deuxième point.

Selon un mode de réalisation, le système comprend en outre un aimant permanent apte à maintenir le projectile immobile lorsqu'aucun solénoïde n'est alimenté.

On peut en outre prévoir une poignée solidaire du tube et une détente.

Selon l'invention, le système comprend un accéléromètre, le module de commande étant apte à déterminer l'inclinaison du tube par rapport à l'horizontale en fonction du signal délivré par l'accéléromètre et à modifier le signal d'alimentation en conséquence.

On peut en outre prévoir une interface conçue pour permettre la saisie d'une vitesse de consigne, le module de commande étant apte à déterminer le signal d'alimentation de manière à faire tendre la vitesse de lancement du projectile vers la vitesse de consigne.

Dans un tel mode de réalisation, l'interface peut comprendre un écran digital apte à afficher la vitesse de consigne choisie, un premier bouton pour augmenter la vitesse de consigne d'une valeur incrémentale et un deuxième bouton pour diminuer la vitesse de consigne de ladite valeur incrémentale.

Dans un mode de réalisation spécifique, le système comprend un aimant permanent apte à maintenir le projectile immobile, un premier solénoïde à signal d'alimentation non réglable, un premier détecteur de vitesse, un second solénoïde à signal d'alimentation non réglable, un second détecteur de vitesse, un troisième solénoïde à signal d'alimentation réglable, un troisième détecteur de vitesse, un quatrième solénoïde à signal d'alimentation réglable et un quatrième détecteur de vitesse.

D'autres avantages et caractéristiques de l'invention apparaîtront à l'examen de la description détaillée de modes de réalisation de l'invention nullement limitatifs, et des dessins annexés, sur lesquels :
- la figure 1 représente schématiquement un système selon un mode de réalisation de l'invention,
- la figure 2 représente schématiquement le tube creux du système de la figure 1, et
- la figure 3 représente un procédé de commande du système de la figure 1.

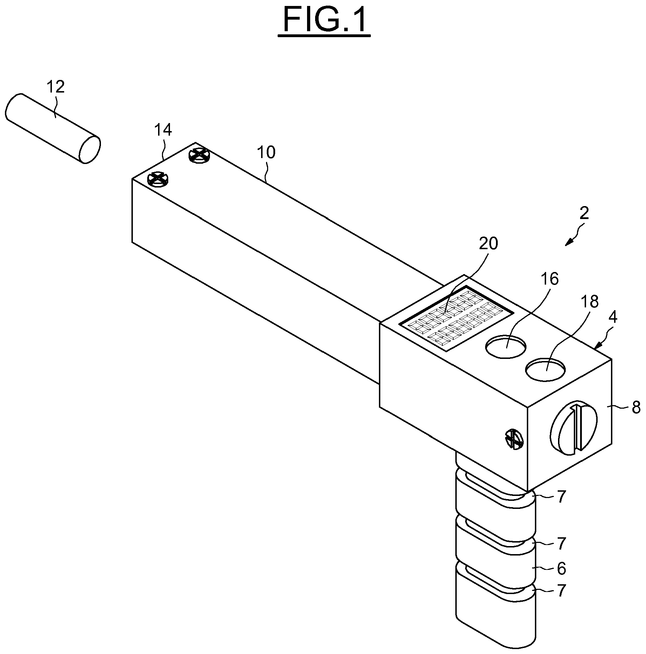

En référence à la figure 1, le système 2 pour lancer un projectile contre un composant de véhicule automobile comprend un carter 4 et une poignée 6. La poignée 6 est solidaire du carter 4.

Le carter 4 a une forme oblongue, et comprend deux parties 8 et 10 formant chacune un parallélépipède rectangle.

Un projectile 12 est représenté sur la figure 1, destiné à être introduit dans un tube (non représenté), par un trou (non représenté) situé sur la face 14 de la deuxième partie 10, du côté opposé à la première partie 8.

La première partie 8 du carter 4 comprend un premier bouton 16, un deuxième bouton 18 et un écran digital 20. L'écran d'affichage 20 est un écran à deux lignes de huit caractères chacune et est retroéclairé.

La poignée 6 est adaptée aux dimensions de la main d'un utilisateur. Elle comprend par ailleurs une détente (non représentée). La poignée 6 est par ailleurs dotée d'une multitude de stries 7 permettant une meilleure prise en main par un utilisateur.

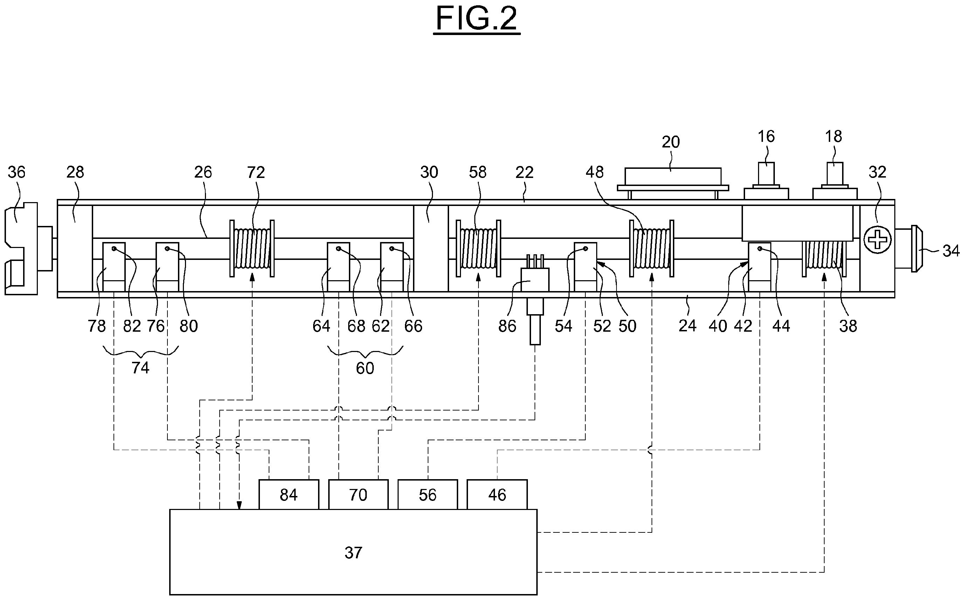

On a représenté sur la figure 2 les composants du système de lancement situés à l'intérieur du carter 4. Sur la figure 2, le carter 4 et la poignée 6 ne sont pas représentés.

Le système 2 comprend un premier circuit imprimé 22 et un deuxième circuit imprimé 24. Les circuits imprimés 22 et 24 sont de forme similaire, et sont respectivement destinés à être fixés au côté supérieur et au côté inférieur du carter 4. Le système 2 comprend un tube 26 s'étendant selon la longueur du carter 4. Le tube 26 s'étend par conséquent entre les circuits imprimés 22 et 24, sur toute la longueur de ceux-ci.

Le tube 26 est maintenu par rapport aux circuits imprimés 22 et 24 au moyen de trois supports 28, 30 et 32. Les supports 28, 30 et 32 rigidifient par ailleurs davantage l'ensemble solidaire constitué des circuits imprimés 22 et 24, et du carter 4. Une vis 34 et un embout 36 contribuent encore à rigidifier cet ensemble.

Le tube 26 est creux, de telle sorte que le projectile 12 représenté en figure 1 est capable de se déplacer à l'intérieur de celui-ci. Par ailleurs, le tube creux 26 comprend une ouverture au niveau de l'embout 36. De la sorte, le projectile 12 peut entrer ou sortir du tube creux 26 au niveau de l'embout 36.

Le projectile 12 est réalisé en un matériau quelconque ferromagnétique, pouvant par exemple être de l'acier ou de l'inox.

Le système 2 comprend par ailleurs un module de commande 37, schématiquement représenté sur la figure 2 par un cadre rectangulaire.

Le support 32 comprend un aimant permanent (non visible sur la figure 2) disposé autour du tube creux 26. L'aimant permanent disposé dans le support 32 est destiné à retenir le projectile 12 dans le tube creux 26, lorsqu'aucune autre action mécanique que son poids ne s'exerce sur celui-ci.

En d'autres termes, l'aimant permanent est disposé et chargé de manière à pouvoir retenir le projectile 12 au niveau du support 32, dans le pire des cas lorsque le tube creux 26 est orienté à la verticale, l'embout 36 vers le bas.

Le système 2 comprend un premier solénoïde 38 à signal d'alimentation non réglable. En d'autres termes, le solénoïde 38 est conçu de manière à toujours être alimenté avec la même intensité I₃₈ et à toujours générer le même champ magnétique B₃₈. Le champ magnétique B₃₈ généré par le solénoïde 38 lorsqu'il est alimenté est suffisant pour entraîner le projectile 12 en translation selon la direction longitudinale du tube 26, vers la gauche (par rapport à la figure 2).

Le champ magnétique constant B₃₈ que le solénoïde 38 doit fournir est donc suffisamment élevé pour arracher le projectile 12 à l'attraction de l'aimant permanent disposé dans le support 32, lorsque le tube 26 est à l'horizontale.

Le système 2 comporte un premier détecteur 40. Le premier détecteur 40 est un détecteur de type simple capable de mesurer la vitesse du projectile 12 en aval du premier solénoïde 38.

Par la suite, un détecteur de vitesse de type simple désigne un détecteur de vitesse doté d'un unique capteur apte à détecter le passage du projectile 12. Un détecteur de type simple est particulièrement adapté pour déterminer la vitesse instantanée du projectile 12. Le détecteur 40 comporte un capteur photovoltaïque constitué d'une première cellule photovoltaïque 42 et d'une seconde cellule photovoltaïque non représentée sur la figure 2, située en regard de la cellule 42, de l'autre côté du tube creux 26.

Le tube creux 26 comprend dans sa paroi deux trous situés en regard des deux cellules photovoltaïques. De cette manière, le capteur 42 est capable de déterminer la présence du projectile 12 dans le tube 26, au point précis indiqué par la référence 44 sur la figure 2.

Le module de commande 37 comprend un calculateur 46 capable de recueillir l'information délivrée par le capteur 42. Lorsque le projectile 12 se déplace dans le tube creux 26, le calculateur 46 est capable de mesurer l'instant auquel il apparaît devant la cellule photovoltaïque 44, et l'instant auquel il disparaît.

Le calculateur 46 est alors capable de calculer le temps de passage du projectile 12 devant la cellule photovoltaïque 44. Connaissant la longueur du projectile 12, le calculateur 46 est capable de calculer la vitesse du projectile 12, au point indiqué sur la figure 2 par la référence 44.

Le système 2 comprend par ailleurs un second solénoïde 48 à signal d'alimentation non réglable. Comme le solénoïde 38, le solénoïde 48 est alimenté toujours avec la même intensité I₄₈ et génère toujours le même champ magnétique B₄₈.

Le système 2 est par ailleurs doté d'un second détecteur 50 de vitesse de type simple. Le second détecteur 50 comprend un unique capteur 52 comprenant une première cellule photovoltaïque 54 et une seconde cellule photovoltaïque non représentée sur la figure 2, de manière à détecter la présence du projectile au point précis indiqué par la référence 54 sur la figure 2.

Un calculateur 48 est apte à recueillir le signal délivré par le capteur 52 et donc à calculer la vitesse du projectile 12, au point indiqué sur la figure 2 par la référence 54.

Le système 2 comprend un troisième solénoïde 58 à signal d'alimentation réglable. Un solénoïde à signal d'alimentation réglable désigne un solénoïde conçu pour être alimenté à des intensités différentes, de manière à générer un champ magnétique variable. Le solénoïde 58 génère un champ magnétique B₅₈ variable dépendant de l'intensité d'alimentation I₅₈ variable.

Le système 2 comprend un troisième détecteur 60 de vitesse de type double. Un détecteur de vitesse de type double est un détecteur doté d'un premier capteur et d'un second capteur, distinct du premier. Les détecteurs de vitesse de type double sont plus précis et plus fiables que les détecteurs de vitesse de type simple. Par ailleurs, un détecteur de type double est particulièrement adapté pour déterminer la vitesse moyenne du projectile 12 entre les deux capteurs. En combinant avantageusement les capteurs de type simple et de type double, le système 2 permet de mettre en oeuvre un meilleur contrôle de la vitesse du projectile 12. Le détecteur 60 comprend un premier capteur 62 et un second capteur 64. Les capteurs 62 et 64 sont similaires aux capteurs 42 et 52. En ce sens, les capteurs 62 et 64 sont respectivement capables de détecter la présence du projectile 12 respectivement aux points désignés sur la figure 2 par les références 66 et 68.

Un calculateur 70 est capable de recueillir les signaux émis par les capteurs 62 et 64. De cette manière, les capteurs 62 et 64 sont capables de détecter l'instant d'apparition, ou l'instant de disparition du projectile 12, respectivement aux points désignés par les références 66 et 68.

Le calculateur 70 est alors capable de déterminer les instants d'apparition ou de disparition du projectile 12 en ces points. Le calculateur 70 peut alors calculer le temps écoulé entre les deux apparitions ou entre les deux disparitions. Connaissant la distance entre les points désignés par les références 66 et 68, le calculateur 70 peut calculer la vitesse moyenne du projectile 12 entre les capteurs 62 et 64.

Le système 2 comprend un quatrième solénoïde 72, à signal d'alimentation réglable. Le quatrième solénoïde 72 est capable de générer un champ magnétique B₇₂ variable dépendant de l'intensité I₇₂ variable.

Le système 2 comprend un quatrième détecteur 74 de vitesse de type double. Le quatrième détecteur 74 comprend un premier capteur 76 et un deuxième capteur 78. Les capteurs 76 et 78 sont respectivement capables de détecter l'apparition du projectile 12 aux points désignés sur la figure 2 par les références respectives 80 et 82.

Un calculateur 84 est capable de recueillir les signaux délivrés par les capteurs 76 et 78. De cette manière, le quatrième détecteur 74 est capable de mesurer la vitesse du projectile 12, lorsque celui-ci est entre le dernier solénoïde 72 et l'embout 36.

Le module de commande 37 recueille les signaux délivrés par les calculateurs 46, 56, 70 et 84. Le module de commande 37 est par ailleurs capable de calculer, en fonction des signaux recueillis, les intensités d'alimentation I₅₈ et I₇₂ des solénoïdes 58 et 72. Le module de commande 37 est également capable de calculer les instants t₁, t₂, t₃, t₄, t₅, t₆, t₇ et t₈. Les instants sont définis comme suit :
- t₁, l'instant de début d'alimentation du premier solénoïde 38,
- t₂, l'instant de fin d'alimentation du premier solénoïde 38,
- t₃, l'instant de début d'alimentation du second solénoïde 48,
- t₄, l'instant de fin d'alimentation du second solénoïde 48,
- t₅, l'instant de début d'alimentation du troisième solénoïde 58,
- t₆, l'instant de fin d'alimentation du troisième solénoïde 58,
- t₇, l'instant de début d'alimentation du quatrième solénoïde 72, et
- t₈, l'instant de fin d'alimentation du quatrième solénoïde 72.

Le système 2 comprend en outre un accéléromètre 86. Le module de commande 37 est capable de recueillir le signal délivré par l'accéléromètre 86, et de déterminer en fonction de ce signal l'inclinaison du tube 26 par rapport à l'horizontale. En fonction de l'inclinaison calculée, le module de commande 37 est par ailleurs capable d'ajuster les valeurs des instants de début et de fin d'alimentation des solénoïdes, ainsi que les intensités d'alimentation des solénoïdes à signal d'alimentation réglable.

Par la suite, on entendra par « vitesse de lancement du projectile 12 » la vitesse animant le projectile 12 lorsqu'il est lancé par le système 2, à l'instant où il arrive au niveau de l'embout 36. Les vitesses sont données en hauteur équivalente.

Les solénoïdes 38, 48, 58 et 72 et le module de commande 37 sont conçus de telle sorte que la vitesse de lancement du projectile 12 soit comprise entre 600 mm et 1100 mm de hauteur équivalente. Le système 2 est par ailleurs conçu de telle sorte que la vitesse du projectile 12 à l'instant où il franchit le détecteur 50 soit approximativement égale à 600 mm de hauteur équivalente. Les solénoïdes 58 et 72 permettent alors de modifier cette vitesse, de manière à faire tendre la vitesse de lancement du projectile vers une vitesse de consigne.

La vitesse de consigne est saisie par un utilisateur au moyen de l'interface constituée des boutons 16 et 18 et de l'écran 20. Une valeur de vitesse de consigne comprise entre 600 mm et 1100 mm de hauteur équivalente est mémorisée dans le module de commande 37. Lorsque le système 2 n'est pas en train de lancer un projectile 12, la vitesse de consigne mémorisée est affichée sur l'écran 20. Lorsque l'utilisateur appuie sur le bouton 16, la valeur de la vitesse de consigne est augmentée d'une valeur incrémentale, en l'espèce 50 mm de hauteur équivalente.

Lorsque l'utilisateur appuie sur le bouton 18, la vitesse de consigne est diminuée d'une valeur incrémentale, en l'espèce 10 mm de hauteur équivalente. On pourrait, sans sortir du cadre de l'invention, envisager un mode de réalisation dans lequel les variations de la vitesse de consigne engendrées par une pression sur les boutons 16 et 18 ne sont pas égales en valeur absolue.

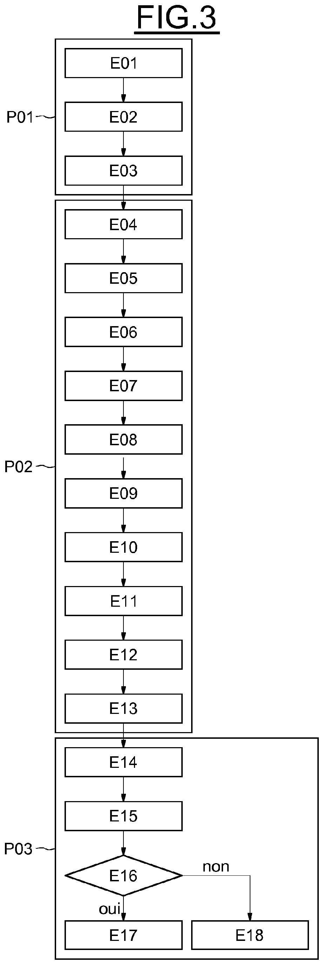

Au moyen d'un tel système, il est possible de mettre en oeuvre un procédé de lancement d'un projectile tel que celui représenté sur la figure 3.

Le procédé de la figure 3 comprend une première phase P01 de paramétrage du tir, une deuxième phase P02 de tir et une troisième phase P03 de validation du tir.

La première phase P01 comprend une première étape E01 d'initialisation du système 2. Au cours de cette étape, une vitesse de consigne par défaut est mémorisée dans le module de commande 37. Dans ce procédé, la vitesse de consigne par défaut est égale à 850 mm de hauteur équivalente. Cette valeur est affichée sur l'écran 20.

La première phase P01 comprend une deuxième étape E02 de mise en place du projectile 12. Au cours de cette étape, le projectile 12 est introduit dans le tube creux 26, au moyen de l'ouverture au niveau de l'embout 36. Pour ce faire, il peut être nécessaire d'orienter le tube creux 26 selon un certain angle par rapport à l'horizontale, l'embout 36 étant dirigé vers le haut. Le projectile 12 se déplace alors à l'intérieur du tube creux 26 jusqu'au support 32. L'aimant permanent au sein du support 32 assure désormais le maintien en position du projectile 12, et ce quel que soit l'angle que forme le tube 26 avec l'horizontale.

La première phase P01 comprend une troisième étape E03 d'ajustement de la vitesse de consigne. Au cours de cette étape, un utilisateur utilise les boutons 16 et 18 pour saisir une vitesse de consigne de son choix. Par exemple, un utilisateur souhaite saisir la vitesse de 950 mm de hauteur équivalente. Il utilise alors le bouton 16 pour augmenter la valeur mémorisée dans le module de commande 37 et affichée sur l'écran 20. L'écran 20 affiche « 950 ».

Lorsque la valeur 950 est affichée sur l'écran 20, l'étape E03 est terminée. La première phase P01 est alors terminée.

La deuxième phase P02 est initialisée par une première étape E04 de pression sur la détente.

La deuxième phase P02 comprend une deuxième étape E05 de modification de l'affichage sur l'écran 20. A l'issue de cette étape, l'écran 20 n'affiche plus la vitesse de consigne mais affiche trois tirets, « --- ».

La deuxième phase P02 comprend une troisième étape E06 de détection de l'inclinaison du tube 26. Au cours de cette étape, le module de commande 37 utilise le signal délivré par l'accéléromètre 86 pour calculer l'angle formé par le tube 26 par rapport à l'horizontale.

La deuxième phase P02 comprend une quatrième étape E07 d'alimentation du premier solénoïde 38. Au cours de cette étape, le module de commande 37 calcule, en fonction de l'inclinaison déterminée lors de l'étape E06, les instants t₁ et t₂. A l'instant t₁, le module de commande 37 applique aux bornes du premier solénoïde 38 l'intensité d'alimentation I₃₈, et arrête de l'appliquer à l'instant t₂.

Il en résulte, entre les instants t₁ et t₂, un champ magnétique B₃₈ entraînant le projectile 12 en translation depuis le support 32 vers la gauche (par rapport à la figure 2).

La deuxième phase P02 comprend une cinquième étape E08 de calcul de la vitesse au premier détecteur. Cette vitesse est calculée au moyen du détecteur 40 et du calculateur 46.

La deuxième phase P02 comprend une sixième étape E09 d'alimentation du deuxième solénoïde 48. Au cours de cette étape, le module de commande 37 utilise l'inclinaison déterminée lors de l'étape E06 et la vitesse déterminée lors de l'étape E08 pour calculer les instants t₃ et t₄. A l'instant t₃, le module de commande 37 applique aux bornes du solénoïde 48 l'intensité I₄₈, et arrête l'alimentation à l'instant t₄. Dans ce procédé, les calculs mis en oeuvre par le module de commande 37 sont tels que la vitesse du projectile 12 après passage du deuxième solénoïde 48 est proche de 600 mm de hauteur équivalente, compris dans un intervalle de +/- 10% autour de cette valeur.

La deuxième phase P02 comprend une septième étape E10 de calcul de la vitesse au deuxième détecteur 50. On calcule par ailleurs l'écart entre la vitesse mesurée et une vitesse cible intermédiaire égale à 600 mm de hauteur équivalente.

La deuxième phase comprend une huitième étape E11 d'alimentation du troisième solénoïde 58. Au cours de cette étape, le module de commande 37 utilise l'inclinaison déterminée lors de l'étape E06 et l'écart de vitesse déterminé lors de l'étape E10 pour calculer l'intensité I₅₈ et les instants t₅ et t₆. A l'instant t₅, le module de commande 37 applique aux bornes du solénoïde 58 l'intensité I₅₈, et arrête l'alimentation à l'instant t₆.

La deuxième phase P02 comprend une neuvième étape E12 de calcul de la vitesse au troisième détecteur 60.

La deuxième phase P02 comprend une dixième étape E13 d'alimentation du quatrième solénoïde 72. Au cours de cette étape, le module de commande 37 utilise l'inclinaison déterminée lors de l'étape E06 et la vitesse déterminée lors de l'étape E12 pour calculer l'intensité I₇₂ et les instants t₇ et t₈. A l'instant t₇, le module de commande 37 applique aux bornes du solénoïde 72 l'intensité I₇₂, et arrête l'alimentation à l'instant t₈. A l'issue de la dixième étape E13, la phase P02 est terminée.

La troisième phase P03 comprend une première étape E14 de mesure de la vitesse de lancement. Au cours de cette étape, on utilise le détecteur 74 pour mesurer la vitesse du projectile à sa sortie du tube 26.

La troisième phase P03 comprend une deuxième étape E15. Au cours de cette étape, on calcule les seuils de tolérance. Dans cet exemple, on considère que le tir est en dehors de la tolérance si la vitesse de lancement est inférieure ou supérieure d'au moins 25 mm de hauteur équivalente à la vitesse de consigne. Les seuils calculés au cours de l'étape E15 sont donc 925 mm et 975 mm de hauteur équivalente.

La troisième phase P03 comprend une troisième étape de test E16. Au cours de la troisième étape E16, on détermine si la vitesse de lancement déterminée au cours de l'étape E14 est comprise entre les deux seuils calculés au cours de l'étape E15. Si tel est le cas, on applique une étape de validation E17, au cours de laquelle on affiche sur l'écran 20 un message de validation « OK ». Dans le cas contraire, on applique une étape E18 de signalisation d'erreur, au cours de laquelle on affiche sur l'écran 20 un message d'erreur « XXX ».

Lorsque les capteurs 76 et 78 constituant le détecteur 74 ne détectent pas le passage d'un projectile, au-delà d'un certain délai, l'étape E18 est appliquée.

Ainsi, au moyen d'un système et d'un procédé tel que ceux présentés précédemment, il est possible de lancer un projectile aux dimensions comparables à celles d'un gravillon sur un composant de véhicule automobile de manière avantageuse par rapport à l'état de la technique antérieur. En particulier, le contrôle de la vitesse de lancement du projectile est plus efficace, et est indépendant de l'inclinaison du tube par rapport à l'horizontale.

Il en résulte une meilleure fiabilité générale des tests de la solidité des pare-brises face aux impacts de gravillons.

## Revendications

1. Système (2) pour lancer un projectile (12) contre un composant de véhicule automobile, comprenant un tube creux (26) à l'intérieur duquel le projectile (12) est apte à se déplacer, au moins un solénoïde (38, 48, 58, 72) apte à générer un champ magnétique capable d'entraîner le projectile (12) en translation selon la direction longitudinale du tube creux (26), au moins un détecteur de vitesse (40, 50, 60, 74) du mouvement de translation du projectile (12) et un module de commande (37) apte à recueillir le signal de vitesse émis par ledit détecteur de vitesse (40, 50, 60, 74), à calculer un signal d'alimentation du solénoïde (I₃₈, I₄₈, I₅₈, I₇₂) et à appliquer ledit signal d'alimentation au solénoïde (38, 48, 58, 72), **caractérisé en ce qu'**il comprend un accéléromètre (86), le module de commande (37) étant apte à déterminer l'inclinaison du tube (26) par rapport à l'horizontale en fonction du signal délivré par l'accéléromètre (86) et à modifier le signal d'alimentation (I₃₈, I₄₈, I₅₈, I₇₂) en conséquence.

2. Système (2) selon la revendication 1, **caractérisé en ce qu'**il comprend au moins un solénoïde (38, 48) à signal d'alimentation (I₃₈, I₄₈) non réglable.

3. Système (2) selon l'une des revendications 1 et 2, **caractérisé en ce que** ledit détecteur (40, 50) est doté d'un capteur (42, 52) apte à détecter le passage du projectile (12) en un point (44, 54) du tube creux (26) et **en ce qu'**il comporte un calculateur (46, 56) capable de mesurer le temps de passage du projectile (12) audit point (44, 54), le calculateur (46, 56) étant en outre capable de déterminer la vitesse du projectile (12) en fonction du temps de passage calculé.

4. Système (2) selon l'une quelconque des revendications 1 à 3, **caractérisé en ce que** ledit détecteur (60, 74) est doté d'un premier capteur (62, 76) apte à détecter un premier passage du projectile (72) en un premier point (66, 80) du tube creux (26) et d'un second capteur (64, 78) apte à détecter un second passage du projectile (12) en un second point (68, 82) du tube creux (26) distinct du premier point (66, 80) et **en ce qu'**il comporte un calculateur (70, 84) capable de mesurer le temps écoulé entre le premier passage et le deuxième passage et de calculer la vitesse du projectile (12) en fonction du temps écoulé mesuré et de la distance entre le premier point (66, 80) et le deuxième point (68, 82).

5. Système (2) selon l'une quelconque des revendications 1 à 4, **caractérisé en ce qu'**il comprend en outre un aimant permanent apte à maintenir le projectile (12) immobile lorsqu'aucun solénoïde (38, 48, 58, 72) n'est alimenté.

6. Système (2) selon l'une quelconque des revendications 1 à 5, **caractérisé en ce qu'**il comprend une poignée (6) solidaire du tube et une détente.

7. Système (2) selon l'une quelconque des revendications 1 à 6, **caractérisé en ce qu'**il comprend une interface conçue pour permettre la saisie d'une vitesse de consigne, le module de commande (37) étant apte à déterminer le signal d'alimentation (I₃₈, I₄₈, I₅₈, I₇₂) de manière à faire tendre la vitesse de lancement du projectile (12) vers la vitesse de consigne.

8. Système (2) selon la revendication 7, **caractérisé en ce que** l'interface comprend un écran digital (20) apte à afficher la vitesse de consigne choisie, un premier bouton (16) pour augmenter la vitesse de consigne d'une valeur incrémentale et un deuxième bouton (18) pour diminuer la vitesse de consigne de ladite valeur incrémentale.

9. Système (2) selon l'une quelconque des revendications 1 à 8, **caractérisé en ce qu'**il comprend un aimant permanent apte à maintenir le projectile (12) immobile, un premier solénoïde (38) à signal d'alimentation (I₃₈) non réglable, un premier détecteur (40) de vitesse, un second solénoïde (48) à signal d'alimentation (I₄₈) non réglable, un second détecteur (50) de vitesse, un troisième solénoïde (58) à signal d'alimentation (I₅₈) réglable, un troisième détecteur (60) de vitesse, un quatrième solénoïde (72) à signal d'alimentation (I₇₂) réglable et un quatrième détecteur (74) de vitesse.

## Patentansprüche

1. System (2) zum Abfeuern eines Projektils (12) gegen eine Kraftfahrzeugkomponente, umfassend ein hohles Rohr (26), in dessen Innerem sich das Projektil (12) bewegen kann, mindestens ein Solenoid (38, 48, 58, 72), das ein Magnetfeld erzeugen kann, welches das Projektil (12) in translatorische Bewegung entlang der Längsrichtung des hohlen Rohrs (26) versetzen kann, mindestens einen Geschwindigkeitsdetektor (40, 50, 60, 74) für die Translationsbewegung des Projektils (12) und ein Steuermodul (37), das das von dem Geschwindigkeitsdetektor (40, 50, 60, 74) abgegebene Geschwindigkeitssignal empfangen kann, ein Versorgungssignal (I₃₈, I₄₈, I₅₈, I₇₂) des Solenoids berechnen kann und das Versorgungssignal an das Solenoid (38, 48, 58, 72) anlegen kann, **dadurch gekennzeichnet, dass** es einen Beschleunigungsmesser (86) umfasst, wobei das Steuermodul (37) die Neigung des Rohrs (26) bezüglich der Horizontalen als Funktion des durch den Beschleunigungsmesser (86) zugeführten Signals bestimmen und das Versorgungssignal (I₃₈, I₄₈, I₅₈, I₇₂) entsprechend ändern kann.

2. System (2) nach Anspruch 1, **dadurch gekennzeichnet, dass** es mindestens ein Solenoid (38, 48) mit einem nicht einstellbaren Versorgungssignal (I₃₈, I₄₈) umfasst.

3. System (2) nach einem der Ansprüche 1 und 2, **dadurch gekennzeichnet, dass** der Detektor (40, 50) mit einem Sensor (42, 52) versehen ist, der das Passieren des Projektils (12) an einem Punkt (44, 54) des hohlen Rohrs (26) detektieren kann, und dass es einen Rechner (46, 56) enthält, der die Zeit des Passierens des Projektils (12) an dem Punkt (44, 54) messen kann, wobei der Rechner (46, 56) des Weiteren die Geschwindigkeit des Projektils (12) in Abhängigkeit von der berechneten Zeit des Passierens bestimmen kann.

4. System (2) nach einem der Ansprüche 1 bis 3, **dadurch gekennzeichnet, dass** der Detektor (60, 74) mit einem ersten Sensor (62, 76), der ein erstes Passieren des Projektils (72) an einem ersten Punkt (66, 80) des hohlen Rohrs (26) detektieren kann, und einem zweiten Sensor (64, 78), der ein zweites Passieren des Projektils (12) an einem zweiten Punkt (68, 82) des hohlen Rohrs (26), der von dem ersten Punkt (66, 80) verschieden ist, detektieren kann, ausgestattet ist und dass er einen Rechner (70, 84) umfasst, der die zwischen dem ersten Passieren und dem zweiten Passieren vergangene Zeit messen kann und die Geschwindigkeit des Projektils (12) als Funktion der gemessenen vergangenen Zeit und des Abstands zwischen dem ersten Punkt (66, 80) und dem zweiten Punkt (68, 82) berechnen kann.

5. System (2) nach einem der Ansprüche 1 bis 4, **dadurch gekennzeichnet, dass** es des Weiteren einen Permanentmagneten umfasst, der das Projektil (12) unbeweglich halten kann, wenn kein Solenoid (38, 48, 58, 72) gespeist wird.

6. System (2) nach einem der Ansprüche 1 bis 5, **dadurch gekennzeichnet, dass** es einen fest mit dem Rohr verbundenen Griff (6) und einen Drücker umfasst.

7. System (2) nach einem der Ansprüche 1 bis 6, **dadurch gekennzeichnet, dass** es eine Schnittstelle umfasst, die dazu konzipiert ist, das Erfassen einer Sollgeschwindigkeit zu gestatten, wobei das Steuermodul (37) das Versorgungssignal (I₃₈, I₄₈, I₅₈, I₇₂) bestimmen kann, um die Abfeuergeschwindigkeit des Projektils (12) an die Sollgeschwindigkeit anzunähern.

8. System (2) nach Anspruch 7, **dadurch gekennzeichnet, dass** die Schnittstelle eine Digitalanzeige (20), die die gewählte Sollgeschwindigkeit anzeigen kann, einen ersten Knopf (16) zum Erhöhen der Sollgeschwindigkeit um einen inkrementalen Wert und einen zweiten Knopf (18) zum Verringern der Sollgeschwindigkeit um den inkrementalen Wert umfasst.

9. System (2) nach einem der Ansprüche 1 bis 8, **dadurch gekennzeichnet, dass** es einen Permanentmagneten, der das Projektil (12) unbeweglich halten kann, ein erstes Solenoid (38) mit einem nicht einstellbaren Versorgungssignal (I₃₈), einen ersten Geschwindigkeitsdetektor (40), ein zweites Solenoid (48) mit einem nicht einstellbaren Versorgungssignal (I₄₈), einen zweiten Geschwindigkeitsdetektor (50), ein drittes Solenoid (58) mit einem einstellbaren Versorgungssignal (I₅₈), einen dritten Geschwindigkeitsdetektor (60), ein viertes Solenoid (72) mit einem einstellbaren Versorgungssignal (I₇₂) und einen vierten Geschwindigkeitsdetektor (74) umfasst.

## Claims

1. System (2) for launching a projectile (12) at an automotive vehicle component, comprising a hollow tube (26) through the interior of which the projectile (12) is capable of moving, at least one solenoid (38, 48, 58, 72) that is capable of generating a magnetic field that is able to translationally drive the projectile (12) in the longitudinal direction of the hollow tube (26), at least one speed detector (40, 50, 60, 74) for detecting the speed of translational movement of the projectile (12) and a control module (37) that is capable of receiving the speed signal transmitted by said speed detector (40, 50, 60, 74), of calculating a power supply signal for the solenoid (I₃₈, I₄₈, I₅₈, I₇₂) and of applying said power supply signal to the solenoid (38, 48, 58, 72), **characterized in that** it comprises an accelerometer (86), the control module (37) being capable of determining the inclination of the tube (26) with respect to the horizontal according to the signal delivered by the accelerometer (86) and of modifying the power supply signal (I₃₈, I₄₈, I₅₈, I₇₂) as a result.

2. System (2) according to Claim 1, **characterized in that** it comprises at least one solenoid (38, 48) having a non-adjustable power supply signal (I₃₈, I₄₈).

3. System (2) according to either of Claims 1 and 2, **characterized in that** said detector (40, 50) is provided with a sensor (42, 52) that is capable of detecting the transit of the projectile (12) at one point (44, 54) of the hollow tube (26) and **in that** it includes a computer (46, 56) that is capable of measuring the transit time of the projectile (12) at said point (44, 54), the computer (46, 56) additionally being able to determine the speed of the projectile (12) according to the calculated transit time.

4. System (2) according to any one of Claims 1 to 3, **characterized in that** said detector (60, 74) is provided with a first sensor (62, 76) that is capable of detecting a first transit of the projectile (72) at a first point (66, 80) of the hollow tube (26) and with a second sensor (64, 78) that is capable of detecting a second transit of the projectile (12) at a second point (68, 82) of the hollow tube (26), separate from the first point (66, 80), and **in that** it includes a computer (70, 84) that is capable of measuring the time that has elapsed between the first transit and the second transit and of calculating the speed of the projectile (12) according to the measured elapsed time and the distance between the first point (66, 80) and the second point (68, 82).

5. System (2) according to any one of Claims 1 to 4, **characterized in that** it additionally comprises a permanent magnet that is capable of holding the projectile (12) immobile when no solenoid (38, 48, 58, 72) is being supplied with power.

6. System (2) according to any one of Claims 1 to 5, **characterized in that** it comprises a grip (6) that is rigidly connected to the tube and a trigger.

7. System (2) according to any one of Claims 1 to 6, **characterized in that** it comprises an interface that is designed to allow a speed setpoint to be input, the control module (37) being capable of determining the power supply signal (I₃₈, I₄₈, I₅₈, I₇₂) so as to make the launch speed of the projectile (12) tend towards the speed setpoint.

8. System (2) according to Claim 7, **characterized in that** the interface comprises a digital screen (20) that is capable of displaying the chosen speed setpoint, a first button (16) for increasing the speed setpoint by an incremental value and a second button (18) for decreasing the speed setpoint by said incremental value.

9. System (2) according to any one of Claims 1 to 8, **characterized in that** it comprises a permanent magnet that is capable of holding the projectile (12) immobile, a first solenoid (38) having a non-adjustable power supply signal (I₃₈), a first speed detector (40), a second solenoid (48) having a nonadjustable power supply signal (I₄₈), a second speed detector (50), a third solenoid (58) having an adjustable power supply signal (I₅₈), a third speed detector (60), a fourth solenoid (72) having an adjustable power supply signal (I₇₂) and a fourth speed detector (74).
